# FASCICULE DE BREVET EUROPEEN

(11) **EP 0 926 643 B1**
(45) Date de publication et mention de la délivrance du brevet: **11.12.2013**
(21) Numéro de dépôt: 99104129.4
(22) Date de dépôt: 12.10.1994
(51) Int. Cl.: G07F 17/30, G11B 27/00

(54) **Système de reproduction audio-visuelle numérique intelligent**
Numerisches, intelligentes, audiovisuelles Reproduktionssystem
Intelligent digital audiovisual playback system

(43) Date de publication de la demande: 30.06.1999
(62) Demande divisionnaire de: 94930247.5
(73) Titulaire: Touchtunes Music Corporation, Las Vegas, NV 89104 (US)
(72) Inventeur: Nathan, Guy, 91330 Yerres (FR); Mastronardi, Tony, Pierrefonds, Quebec H8Y 3L2 (CA)
(74) Mandataire: Debay, Yves

(56) Documents cités:
- EP-A- 0 313 359
- EP-A1- 0 529 834
- WO-A-91/20082
- WO-A-93/18465
- DE-A1- 3 815 071
- DE-A1- 3 820 835
- GB-A- 2 122 799
- GB-A- 2 193 420
- GB-A- 2 259 398
- US-A- 4 920 432
- US-A- 4 949 187

## Description

La présente invention concerne un système de reproduction audio-visuelle déclenché par paiement de redevances.

De tels systèmes de reproduction audio-visuelle sont généralement rencontrés dans des cafés ou dans des pubs. Ce type de système est en fait constitué d'une machine de reproduction sonore appelée ordinairement jukebox associée à un moniteur assurant la visualisation d'images vidéo ou de clips vidéo. Pour cela, le juke-box est équipé d'un lecteur de disques compacts vidéo et d'une discothèque de disques compacts vidéo et comporte des boutons de présélection repérant les titres des morceaux de musique qu'il est proposé de choisir. Le paiement d'une redevance adéquate suivi d'une ou plusieurs présélections autorise le déclenchement du système avec le chargement automatique, dans le lecteur, du disque sur lequel figure le morceau choisi, la reproduction audio-visuelle désirée pouvant alors commencer.

Ces systèmes, bien que permettant une reproduction fidèle et de bonne qualité, présentent néanmoins de sérieux inconvénients. Ainsi, un premier inconvénient est relatif au volume nécessaire pour le stockage de la discothèque, ce qui implique, en conséquence, que le système soit de dimensions importantes et donc encombrant. Egalement, ces systèmes qui font appel à un matériel surtout mécanique utilisant des techniques sophistiquées présentent des taux de pannes significatifs, ce qui est un autre inconvénient. Enfin, il est très rare que tous les morceaux d'un disque soient régulièrement écoutés, certains même ne le sont quasiment jamais mais ne peuvent cependant pas pour autant être éliminés. Outre cet inconvénient, l'inconvénient suivant est présenté du fait que les sociétés gérant et distribuant ces systèmes mettent dans le circuit un nombre limité de disques identiques et imposent une certaine rotation chez leurs clients, ce qui implique parfois pour ces derniers une attente désagréable lorsqu'un disque n'est pas disponible.

Par ailleurs, il est connu par la demande de brevet PCT/WO9318465 des juke-boxes informatisés permettant de recevoir à travers un réseau de télécommunication et un modem connectant le jukebox au réseau, des informations numérisées constituant des chansons ou morceaux musicaux téléchargés dans une mémoire de masse du jukebox. Le système de communication sert également au téléchargement de fichiers graphiques étant compressés avant leur envoi sur le réseau. Le processeur du jukebox exploite ensuite ces fichiers en les décompressant et en envoyant les données graphiques au circuit vidéo et les données de la chanson au circuit audio.

Toutefois, le processeur gère également les interfaces homme-machine et la gestion de ces différents éléments se fait séquentiellement en affichant les images graphiques représentatives de la chanson, ensuite en répondant à l'actionnement des touches par l'utilisateur, puis en recherchant si l'utilisateur a payé les montants souhaités et enfin, lorsque le montant souhaité a été réglé, à déposer la sélection dans une file en vue de son exécution ultérieure. Par ailleurs, ce système ne peut fonctionner qu'en affichant d'abord les images graphiques et en lançant ensuite l'exécution de la chanson, car le processeur ne peut, d'après les logigrammes, exécuter deux tâches en même temps. Enfin, les représentations graphiques sont uniquement des données digitalisées par une table à scanner de la couverture de l'album de la chanson. En aucun cas, un tel jukebox ne permet l'affichage d'images animées en même temps que la diffusion de chanson ou de musique. De même, le processeur, étant utilisé pour la décompression et le traitement des informations numériques en vue de la transformation en signaux audio, ne pourra prendre en compte de nouvelles actions d'un utilisateur qui rechercherait à effectuer une nouvelle sélection. Ceci apparaît clairement, notamment en page 12 de la demande PCT, lignes 25 à 37. La sélection de nouvelles chansons ne peut se faire que dans le cas où le juke-box est en mode attractif, c'est-à-dire dans le mode où il affiche successivement des représentations graphiques des différentes chansons stockées dans la mémoire de masse du jukebox.

La présente invention a pour but de remédier aux divers inconvénients présentés par les systèmes de l'art antérieur et propose un système de reproduction audio-visuelle numérique intelligent, pratique à mettre en oeuvre, peu encombrant, fiable, autorisant le stockage au niveau du titre ainsi que la suppression ou l'insertion aisée de titres respectivement non écoutés ou désirés et ceci tout en conservant des performances et une qualité de reproduction de haut niveau.

Pour cela, le système de reproduction audiovisuelle déclenché par paiement de redevances comprend un dispositif à microprocesseur relié à un dispositif de paiement, ledit dispositif à microprocesseur d'une part comportant des moyens de mémorisation, pour, entre autres, stocker sous forme numérique les informations visuelles et sonores à exploiter, et d'autre part étant relié, par l'intermédiaire d'interfaces, à des moyens de visualisation et des moyens de reproduction sonores permettant de créer un univers multimédia, ledit système étant géré au moyen d'un système d'exploitation multitâche incluant une librairie d'outils et de services intégrée dans les moyens de mémorisation pour permettre l'exécution d'opérations simultanées et ordonnées sur au moins les moyens de visualisation et les moyens de reproduction sonore en évitant tout conflit.

Ainsi, toutes les informations audio-visuelles à exploiter sont numérisées et stockées en mémoire et peuvent être alors relues avec une grande fidélité permettant au système de reproduction audio-visuelle selon l'invention de présenter des hautes performances. Un titre nouveau peut être aisément introduit en mémoire de même qu'un titre peu écouté peut être tout aussi facilement supprimé de la mémoire. Avec les sélections musicales, les couvertures d'albums correspondantes peuvent être également stockées sous forme numérisée, pour être ensuite affichées. Les moyens de mémorisation sont prévus pour le stockage d'un minimum de 350 à 400 titres, et peuvent être étendus sans aucune difficulté. La simplicité et l'absence d'éléments mécaniques dans le système pour la reproduction des informations audio-visuelles font que le taux de pannes est considérablement réduit, ce qui entraîne une maintenance à faible coût avec l'assurance d'un minimum d'interventions. De plus le système d'exploitation multitâche incluant une librairie contenant un ensemble d'outils et de services, permet de faciliter très significativement l'exploitation du fait de son intégration dans les moyens de mémorisation et de la grande flexibilité ainsi apportée. En particulier, il est, grâce à cela, possible de créer un univers multimédia en gérant de manière simple et efficace simultanément la reproduction de sons, l'affichage d'images ou de graphiques et l'animation vidéo. En outre, puisque les informations audio-visuelles sont numériseés et stockées dans les moyens de mémorisation, il est utilisé considérablement moins de place que pour un système de reproduction audio-visuelle traditionnel et par conséquent l'encombrement du système selon l'invention est nettement moindre. Dans ces conditions, les dimensions du bâti dans lequel est placé le système sont très réduites et le coût de l'ensemble se trouve également significative ment abaissé. L'aspect extérieur du bâti peut, bien entendu, être aisément adapté au caractère de l'établissement.

De manière avantageuse, le système de reproduction audiovisuelle déclenché par paiement de redevances comprend un dispositif à microprocesseur relié à un dispositif de paiement, ledit dispositif à microprocesseur d'une part comportant des moyens de mémorisation pour, entre autres, stocker, sous forme numérique, les informations visuelles et sonores à exploiter, et d'autre part étant relié, par l'intermédiaire d'interfaces, à des moyens de visualisation et des moyens de reproduction sonore permettant de créer un univers multimédia, ledit système étant géré au moyen d'un système d'exploitation incluant une librairie d'outils et de services intégrée dans les moyens de mémorisation, et autorisant l'exécution de multiples fragments de code d'opérations réalisées sur les moyens de visualisation et les moyens de reproduction sonore.

La connexion au réseau de distribution d'informations audiovisuelles, de type propriétaire, autorise alors le rapatriement et l'insertion quasi-immédiate de titres désirés dans les moyens de mémorisation du présent système, les liaisons de télécommunications étant, de préférence, de type haute vitesse. Bien entendu, le système d'exploitation multitâche, tout en autorisant la création d'un univers multimédia, permet d'utiliser simultanément et sans conflit les services de télécommunications inclus dans la librairie d'outils et de services.

De manière remarquable, les moyens de visualisation comportent un écran tactile pour permettre le contrôle du système ou la maintenance en fonction des outils ou services de la librairie exécutée.

De manière caractéristique, les moyens de visualisation permettent l'affichage d'images animées telles que des clips vidéo ou des images graphiques fixes pendant la reproduction sonore.

De même, un outil de gestion est déclenché par un commutateur de clé actionné par le gérant pour permettre à ce dernier, soit de configurer le système, soit d'acquérir de nouvelles sélections.

De préférence, mais cependant de manière non limitative, le système de reproduction audio-visuelle utilise les éléments matériels énumérés et référencés ci-après.

Le dispositif à microprocesseur à utiliser est un système compatible PC de haute performance, le choix, lors de la mise en oeuvre, s'est porté sur un système du type Intel 80486 DX/2 qui posséde des moyens de mémorisation et les caractéristiques suivantes :
- compatibilité avec le bus local Vesa,
- antémémoire du processeur: 256 kO,
- mémoire vive: RAM de 32 MO,
- ports série et parallèle de haute performance,
- adaptateur graphique type SVGA à microprocesseur,
- contrôleur de bus type SCSI/2,
- mémoire vive RAM statique auto-alimentée.

Les moyens de visualisation se composent principalement:
- d'un moniteur vidéo à écran plat de 14 pouces (35,56 cm) sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo,
- d'un écran tactile "Intelli Touch" de 14 pouces (35,56 cm) de chez Elo Touch Systems Inc. qui inclut un panneau de revêtement de la vitre utilisant la "technologie avancée d'onde de surface" ainsi qu'un contrôleur de bus de type AT. Cet écran tactile permet d'afficher diverses informations de sélection utilisées par les clients, ainsi que des informations de commandes et de contrôle de gestion utilisées par le gérant ou le propriétaire du système. Il est également utilisé à des fins de maintenance en combinaison avec un clavier externe qui peut être relié au système qui possède pour cela un connecteur de clavier, contrôlé par un verrou à clé.

Faisant partie également des moyens de mémorisation, des modules de stockage utilisant des disques durs de type SCSI haute vitesse et haute capacité, sont associés aux moyens de mémorisation déjà présents dans le dispositif à microprocesseur. Ces modules servent au stockage d'informations audio-visuelles.

Un adaptateur de modem de télécommunications haute vitesse 28,8 k/bps est intégré pour autoriser la liaison avec le réseau de distribution d'informations audio-visuelles.

Pour la reproduction des informations sonores des sélections musicales, le système comporte des haut-parleurs amplifiés intégrés et est équipé de cartes électroniques du commerce de type synthétiseur de musique prévues pour supporter un grand nombre de sources d'entrée tout en fournissant une sortie présentant une qualité de type CD (disque compact), en particulier :
- adaptateur audio multimédia à microprocesseur, du type carte "Sound Blaster" SBP32AWE de chez Creative Labs Inc.

Une alimentation thermiquement régulée de 240 watts ventilée fournit l'énergie au système. Cette alimentation est protégée contre les surintensités et les suroscillations.

Le système de reproduction audio-visuelle et notamment le dispositif à microprocesseur sont configurables également par télécommande, pour cela sont utilisés :
- une télécommande infrarouge de chez Mind Path Technologies Inc., émetteur qui possède 15 touches de commande pour le système à microprocesseur et 8 touches de commande pour le dispositif de projection.
- un récepteur infrarouge avec adaptateur série de chez Mind Path Technologies Inc.

Un dispositif de paiement de redevances de chez National Rejectors Inc., est également intégré au système. Il est également possible d'utiliser tout autre dispositif qui permette la réception de tout mode de paiement par pièces, billets, jetons, cartes magnétiques à puces ou combinaison des moyens de paiement

Pour loger le système, il est de plus prévu un châssis ou bâti en acier avec garnitures extérieures personnalisables.

Outre ces éléments, un microphone sans fil est incorporé au système, ce qui permet de transformer ce dernier en un puissant système d'annonces et d'informations destinées au public ou éventuellement en machine de karaoké. De même, un système de haut-parleurs sans fil peut être utilisé par le système. Enfin, une commande à distance permet, par exemple de derrière le bar, d'accéder et de contrôler différentes commandes telles que :
- la commande marche/arrêt du microphone,
- la commande de mise en sourdine des haut-parleurs,
- la commande de contrôle de volume sonore,
- la commande d'annulation de la sélection musicale en train d'être écoutée.

Le choix du logiciel développé ou utilisé pour l'exploitation du système de reproduction audio-visuelle a été volontairement orienté vers une importante convivialité pour l'utilisateur. Dans cette optique, toutes les caractéristiques dudit système peuvent être contrôlées par l'intermédiaire de l'écran tactile graphique d'utilisation simple et immédiate en coopération avec un système d'aide à synthèse de parole.

Pour cela, de manière remarquable, le système de reproduction audiovisuelle est de plus, relié, par l'intermédiaire d'une interface, à un modem de télécommunications, ledit système étant connecté à un réseau de distribution d'informations audiovisuelles au moyen du modem de télécommunications, cette liaison de télécommunications étant également gérée par un module TSM de service de télécommunications du système d'exploitation inclus dans la librairie d'outils et de services intégrée dans les moyens de mémorisation,

De manière remarquable, le module TSM permet notamment d'exécuter une pluralité de tâches comprenant une tâche de perfectionnement à distance du système d'exploitation du système de reproduction.

De manière remarquable, le système de reproduction audiovisuelle comporte une temporisation pour un déclenchement automatique et périodique d'une fonction d'un module de routine d'inactivité après une durée prédéterminée d'inutilisation du système, cette temporisation étant inscrite dans les moyens de mémorisation et gérée par le système d'exploitation.

De manière remarquable, les moyens de visualisation comportent principalement un moniteur vidéo pour la reproduction des images des informations audiovisuelles coopérant avec un écran tactile de contrôle et de commande pour sélectionner au moins un tableau de contrôle parmi les suivants, un premier tableau à déroulement de sélection de titres pour aider à la recherche et à la sélection d'un titre désiré, un second tableau de contrôle de gestion pour le réglage du volume, des basses, des aiguës ou la commande de panoramiques sur le moniteur vidéo, un troisième tableau de balayage de la base de données de titres, d'utilisation privée, pour permettre l'exploration de la base de données contenant les titres disponibles au travers du réseau de distribution d'informations audiovisuelles, et un quatrième tableau de statistiques, d'utilisation privée, pour les estimations et les calculs statistiques relatifs aux titres.

De manière remarquable, le système de reproduction comporte un module de commande système pour réaliser des fonctions envoyées par un dispositif de télécommande infrarouge au système et constituées par une entrée demandée par ce dispositif de télécommande.

De manière remarquable, les fonctions possibles sont au moins l'une des fonctions ci-dessous :
- réglage du volume sonore des sélections jouées,
- réglage du volume sonore de la source auxiliaire jouée,
- commande marche-arrêt du microphone,
- réglage du volume sonore du microphone,
- réglage balance, voie droite, voie gauche,
- contrôle du niveau des fréquences basses,
- contrôle du niveau des fréquences aiguës,
- commandes d'annulation ou de saut de plage d'une sélection musicale,
- commande d'effets panoramiques, zoom avant, zoom arrière,
- déclenchement d'une remise à zéro du programme logiciel.

De manière remarquable, le module de commande système traite les commandes reçues par la télécommande dans une session d'arrière-plan pour laisser disponible une session de premier plan pour la réalisation d'autres opérations.

De manière remarquable, le système de reproduction audiovisuelle comporte un module de routine d'inactivité permettant de réaliser au moins une des fonctions ci-après :
- émission de partie de morceaux musicaux présents dans le système échantillonné pendant une durée spécifiée par le gérant ;
- reproduction de sélection complète à des fins promotionnelles internes après une période d'inactivité déterminée ;
- repli vers une source auxiliaire après un délai déterminé d'inactivité.

De manière remarquable, le système de reproduction établit une connexion automatique et périodique avec le réseau de distribution d'informations audiovisuelles via le modem de télécommunications, cette connexion étant gérée par le système d'exploitation multitâche.

De manière remarquable, le système d'exploitation comprend un module d'enregistrement permettant d'envoyer, sur le réseau de distribution d'informations audiovisuelles via le modem, des paramètres d'enregistrement du système de reproduction audiovisuel.

De manière remarquable, le système d'exploitation comprend un module de sécurité mettant le système de reproduction hors services si les paramètres d'enregistrement sont déterminés comme invalides par le réseau de distribution d'informations audiovisuelles.

De manière remarquable, le module d'enregistrement met le système de reproduction hors service lorsqu'aucune connexion n'a pu être établie avec le réseau de distribution pendant une période déterminée.

De manière remarquable, le système d'exploitation du système de reproduction audiovisuelle enregistre, sur les moyens de mémorisation, les sommes encaissées à la suite du paiement effectué par l'utilisateur puis établit une connexion avec le réseau de distribution qui calcule, à partir des sommes enregistrées, les redevances de droits d'auteur que le gérant ou propriétaire du système doit payer.

De manière remarquable, les informations audiovisuelles sont stockées sous forme compressée et le système d'exploitation comprend des moyens de décompression pour décompresser les informations audiovisuelles au moment où ces dernières sont reproduites sur les moyens de visualisation et les moyens de reproduction sonores.

De manière remarquable, le format numérisé des informations audiovisuelles est de qualité hi-fi ou CD.

De manière remarquable, les moyens de mémorisation comprennent un catalogue des titres relatifs aux informations audiovisuelles disponibles, avec les redevances correspondantes, la sélection d'un titre entraînant automatiquement un traitement interne réalisant le cumul des redevances relatives au titre sélectionné.

De manière remarquable, le dispositif de paiement comprend un monnayeur à pièces, et/ou un lecteur de billets, et/ou un lecteur de cartes à puce ou à piste magnétique.

Les sélections par les clients de morceaux musicaux sont grandement simplifiées du fait de la présence de cette interface graphique présentant des facilités telles que le balayage au travers des titres disponibles selon différents critères de sélection, par exemple le titre, l'auteur, la catégorie, etc. De plus, lorsqu'un morceau musical est sélectionné, la couverture de l'album auquel il appartient peut être affichée en même temps que certaines données statistiques telles que l'auteur du morceau, la longueur du morceau, la marque de l'album, etc.

Dans ce but, le logiciel d'exploitation du système a été élaboré autour d'une librairie d'outils et de services très largement orientée vers le domaine audio-visuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau de distribution. De plus, ce logiciel présente une grande flexibilité car il permet au propriétaire de l'établissement d'exploiter des options non disponibles auparavant, options telles que :
- le repli automatique vers une source auxiliaire, comme par exemple un tuner FM, lors d'une inactivité de la fonction principale,
- la télécommande du contrôle de volume sonore,
- l'annulation ou le saut d'un morceau musical,
- la superposition d'un microphone sur le son existant pour effectuer des annonces ou transformer le système en machine karaoké,
- le contrôle de l'amplificateur quant à la puissance de sortie, la balance des voies de droite ou de gauche, le réglage des fréquences basses ou aiguës,
- le démarrage automatique d'une reproduction audio-visuelle à intervalles réglables lorsque le système est inactif.

De manière avantageuse, le réseau de distribution d'informations audio-visuelles fait partie intégrante de l'univers du système selon l'invention et il permet au gérant ou au propriétaire du système de bénéficier de possibilités et de commodités nouvelles et puissantes, comme par exemple :
- l'assistance technique distante : soit pour des problèmes de dysfonctionnements mineurs en assistant le gérant ou le propriétaire du système, soit pour des problèmes plus importants en aidant les techniciens à localiser la panne et les composants défectueux,
- la gestion de la sécurité : chaque système se met en rapport avec un système contrôleur local selon un schéma temporel préétabli pour l'acquisition d'un signal d'approbation, sous la forme d'un numéro d'enregistrement, l'autorisant à fonctionner. En outre, s'il est constaté une fraude ou si le système ne peut plus communiquer au travers du réseau, ledit système s'arrête automatiquement de fonctionner,
- l'acquisition de morceaux musicaux avec les couvertures d'albums : le gérant ou le propriétaire du système peut sélectionner et acquérir des morceaux musicaux en explorant la base de données de sélection. Le transfert d'un morceau musical avec sa couverture d'album ainsi que l'intégration dans la liste des titres disponibles sont effectués dans une période de temps très réduite,
- le perfectionnement du système : la maintenance corrective de problèmes importants ou mineurs relatifs au logiciel d'exploitation du système, les améliorations ou les perfectionnements sont rendus possibles par l'intermédiaire des liaisons de télécommunications au travers du réseau de distribution. Seules quelques minutes sont nécessaires pour transférer ces modifications à un quelconque système du réseau,
- la collecte de statistiques : toutes les statistiques et les données internes à un système sont rapidement disponibles pour être compilées au travers du réseau de distribution, ces statistiques permettent d'analyser concrètement et efficacement toute situation du marché,
- la facturation : le réseau de distribution appelle automatiquement le système qui a enregistré les sommes encaissées par le système à la suite du paiement effectué par l'utilisateur, calcule les redevances de droits d'auteur que le gérant ou le propriétaire du système doit payer à la société du réseau de distribution et produit les états comptables appropriés,
- la commercialisation et les promotions : sur requête d'un fournisseur de titres, dans un but promotionnel, la reproduction numérique haute fidélité d'un titre est disponible pour le gérant ou le propriétaire du système dans les heures qui suivent, par l'intermédiaire du réseau de distribution.

La numérisation des sélections musicales qui sont rendues disponibles au travers du réseau de distribution est réalisée à l'aide de divers outils logiciels commercialement disponibles en fournissant des fichiers formatés de données standard.

Les données audio-visuelles numérisées sont stockées dans un format utilisant une compression standard. Le système décompresse les sélections musicales stockées dans les moyens de mémorisation au moment où ces dernières sont reproduites, ce qui permet ainsi de réduire considérablement l'espace mémoire nécessaire pour les stocker tout en optimisant les délais lors des transferts par l'intermédiaire des liaisons de télécommunications.

Chaque sélection est disponible selon deux formats numérisés: avec une qualité hi-fi ou une qualité CD. Ceci autorise un équilibre avantageux entre l'espace mémoire nécessaire et la qualité de reproduction requise qui dépend du niveau de bruit effectif dans l'établissement et de l'exigence de qualité.

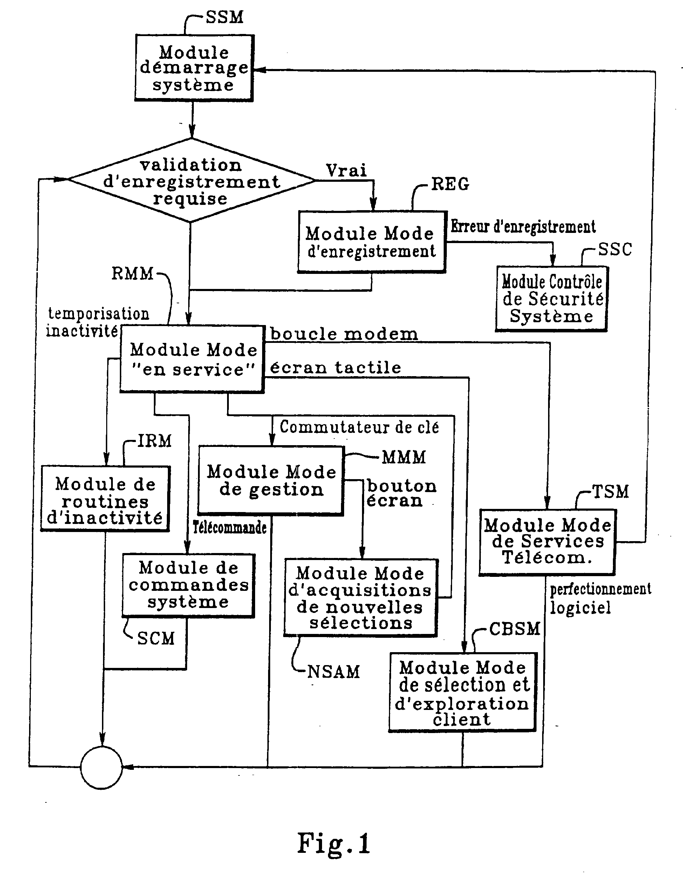

La description suivante, en regard du dessin annexé, le tout donné à titre d'exemple non limitatif, fera bien comprendre comment l'invention peut être réalisée.

La figure unique représente un organigramme faisant apparaître des modules de services spécifiques d'une tâche et géré au moyen du système d'exploitation multitâche, l'ensemble des modules étant inclus dans une librairie stockée dans les moyens de mémorisation.

Préalablement à la description et à la lecture de cet organigramme, il est essentiel de noter que, bien que tous ces modules décrits séparément semblent être utilisés d'une manière séquentielle, en réalité, les tâches spécifiques de ces modules sont exécutées simultanément dans un environnement utilisant le système d'exploitation multitâche. Par conséquent, l'organigramme indique des opérations spécifiques qu'un module doit effectuer et non un branchement vers ce module qui invaliderait toutes les opérations effectuées par les autres modules.

Le premier module, référencé SSM, est le module de démarrage du système. Ce module ne fournit qu'un seul service, par conséquent, il se charge automatiquement au moment de la mise sous tension du système. Si le système est démarré avec un numéro d'enregistrement correct, il rentre alors directement dans le mode "en service" du module référencé RMM.

Le module REG est le module de mode d'enregistrement qui, lorsqu'il est activé pour la première fois ou lorsqu'une approbation pour un nouvel enregistrement est nécessaire, indique son numéro de série de logiciel et demande que l'utilisateur entre ses coordonnées telles que le nom de l'établissement, l'adresse et le numéro de téléphone. Lorsqu'un système n'est pas enregistré, il ne fonctionne que pour l'enregistrement, fournissant au gérant l'information appropriée nécessaire de manière à l'activer. Une fois que l'utilisateur a fini de rentrer les informations nécessaires, le système entreprend de s'enregistrer lui-même pour une période d'enregistrement prédéterminée et ensuite s'active totalement lui-même. Avant que la période d'enregistrement n'expire, le système tente d'établir une liaison de télécommunications vers un serveur au travers du réseau de distribution. Si une connexion est établie, il renouvelle son enregistrement avec son numéro de série de logiciel et fournit au serveur l'information additionnelle d'utilisateur apportée par le client. Lorsque la période d'enregistrement expire avant que le système ne soit capable d'établir une liaison et de renouveler son enregistrement, il s'invalide après qu'une période de grâce configurable a expiré et envoie un message "hors d'état de fonctionner". Lorsque le gérant insère sa clé, il est guidé pour l'enregistrement du système. Il est possible d'enregistrer le système au moyen d'un téléphone dans le cas où un problème de liaison de télécommunications ou une panne de ligne téléphonique survient. Quand un système est enregistré et activé au travers du réseau de télécommunications ou par l'intermédiaire d'un appel téléphonique vers le central du réseau de distribution, il devient totalement opérationnel dans les deux modes, "utilisateur" et "gérant" (pour la maintenance du système) pour une autre période d'enregistrement.

Le module RMM est le module du mode "en service", qui est le mode de fonctionnement dans lequel le système entre dès que son numéro d'enregistrement est validé. Dans ce mode, le système est prêt pour manipuler toute requête qui peut être déclenchée par différents évènements prédéfinis, comme par exemple :
- des clients qui touchent l'écran : lorsqu'un client ou un utilisateur touche l'écran, le système transfère le contrôle de sa session de premier plan au module CBSM du mode de sélection et d'exploration client,
- des requêtes d'appel serveur du réseau de télécommunications : lorsque le système détecte une boucle sur la ligne téléphonique, il émet une procédure asynchrone d'arrière-plan: le mode de services télécom du module TSM,
- des requêtes concernant le commutateur de clé : lorsque le gérant tourne le commutateur de clé, le système donne le contrôle de sa session de premier plan au module MMM de mode de gestion,
- la réception d'un signal de télécommande : quand une commande est reçue, elle est traitée dans une session d'arrière-plan par le module SCM de commandes système alors que la session de premier plan reste disponible pour d'autres interventions,
- l'apparition d'une fin de temporisation montrant l'inactivité du système : lorsque l'un des différents temporisateurs est activé, le contrôle est temporairement donné au module IRM de routines d'inactivité pour traitement.

Le système reste dans le mode "en service" jusqu'à ce que l'un des évènements décrits ci-avant se produise.

Le module IRM est le module de routines d'inactivité. Ce module contient des routines réalisant des fonctions prédéterminées auxquelles il peut être fait appel lorsque le système est en inactivité et qu'une période de temps prédéfinie mais réglable, correspondant à une temporisation, s'est écoulée. La liste de fonctions proposée ci-après que le système peut traiter n'est bien entendu pas limitative et ne peut qu'augmenter. Il est, en outre, à noter que les nouvelles fonctions qui seraient désirées ajouter à tout système du réseau de distribution, peuvent l'être très simplement et ceci à tout moment et dès qu'elles sont créées en utilisant les services de télécommande de perfectionnement logiciel. Il peut être offert et ajouté de telles fonctions, par exemple, lorsque des besoins ont été constatés concernant la gestion de l'ensemble des systèmes ou tout simplement pour un système donné. Quelques-unes des fonctions proposées avec le système sont décrites ci-après :
- affichage de la couverture d'un album pour annoncer sa présence ou sa future intégration dans le système: le système affiche un plein écran d'annonces présentant les couvertures des albums pendant une durée désirée. Il peut être utilisé divers effets panoramiques, zoom avant et arrière par exemple, sur les couvertures de chaque album de manière à attirer l'attention des clients,
- émission de parties de morceaux musicaux présents dans le système: le gérant peut dans ce cas contrôler et échantillonner les morceaux émis pendant une durée spécifiée et faire correspondre lesdits morceaux avec l'affichage de couvertures d'albums sur l'écran,
- reproductions de sélections complètes à des fins promotionnelles internes: le gérant peut imposer une période d'inactivité déterminée après laquelle est totalement reproduite une sélection musicale choisie aléatoirement. A la fin de cette période une sélection musicale est donc prise au hasard dans le système puis jouée dans son intégralité sans paiement de redevances,
- reproductions audio à des fins promotionnelles externes: cette option fonctionne de la même manière que la précédente à la différence près qu'elle autorise le système à accepter de jouer des sélections musicales promotionnelles pour lesquelles des tiers ont payé et qui sont distribuées librement au travers du réseau de télécommunications,
- annonces promotionnelles parlées de nouvelles sélections musicales: il est selon cette option possible de faire oralement la promotion de sélections nouvellement ajoutées ou à ajouter dans un futur proche dans le système et ceci par l'intermédiaire des haut-parleurs intégrés au système,
- repli vers une source auxiliaire: le gérant peut à discrétion demander au système, lorsque ce dernier est inactif, de réaliser un repli vers une source auxiliaire. Par exemple, lorsque cette option est activée et qu'un tuner FM est connecté aux entrées du système et que ce dernier est inactif, ledit système aiguille son entrée de source auxiliaire vers sa sortie principale après que le délai déterminé d'inactivité a expiré.

Le module SCM est le module de commandes système. Ce module permet de réaliser des fonctions qui commandent au système d'accepter une entrée demandée par un dispositif de télécommande infrarouge, ces fonctions étant instantanément traitées sans que le processus en train de se dérouler ne soit arrêté. Un très grand nombre de telles fonctions sont possibles, seules quelques-unes sont, de manière non limitative, ci-dessous listées :
- réglage du volume sonore des sélections jouées,
- réglage du volume sonore de la source auxiliaire jouée,
- commande marche/arrêt du microphone,
- réglage du volume sonore du microphone,
- réglage balance, voie droite, voie gauche,
- contrôle du niveau des fréquences basses,
- contrôle du niveau des fréquences aiguës,
- commande d'annulation ou de saut de plage d'une sélection musicale,
- commande d'effets panoramiques, zoom avant, zoom arrière,
- déclenchement d'une remise à zéro du programme logiciel.

Le module MMM est le module de mode de gestion. Ce module est déclenché lorsque le commutateur de clé est tourné par le gérant. L'affichage de l'écran ordinaire est remplacé par un affichage spécifique à la gestion des systèmes. Avec ce nouvel affichage le gérant est capable de contrôler tous les réglages qui sont réalisables avec la télécommande. Il peut également prendre le contrôle de commandes de bas niveau additionnelles permettant par exemple de définir les commandes à valider ou à invalider sur la télécommande. Il est aussi capable de définir un maximum de hauts et bas niveaux pour chaque source de sortie du système, ces limites définissant la gamme disponible sur la télécommande. A partir de cet écran, le gérant est capable d'accéder au mode d'acquisitions de nouvelles sélections en touchant un bouton repéré sur l'écran tactile. Lorsque le gérant a achevé de définir ces commandes ainsi que la configuration du système, il suffit alors qu'il enlève la clé et le système retourne automatiquement au mode "en service".

Le module NSAM est le module de mode d'acquisitions de nouvelles sélections. Lorsque ce mode est activé, un nouvel écran de contrôle apparaît. Ce mode est prévu pour assister le gérant en ce qui concerne la location ou l'acquisition rapide et efficace de titres de sélections musicales. Pour cela, l'écran offre différentes options comme par exemple:
- une recherche par titre,
- une recherche par artiste,
- une recherche par catégorie (Pop, Rock, Country, etc.),
- tri alphabétique,
- tri par date de diffusion.

Le gérant peut effectuer un balayage de l'ensemble des titres disponibles et les sélectionner, simplement en touchant sur l'écran leur désignation, pour les charger. Une fois que les sélections ont été réalisées et que le gérant est sorti du module, le système envoie automatiquement la liste des sélections pour retourner à l'arrière-plan vers le module de mode de services de télécommunications pour traitement, puis retourne avec le contrôle de premier plan au mode de gestion.

Le module CBSM est le module de mode de sélection et d'exploration client. L'accès à ce module est déclenché à partir du mode "en service" au moyen d'une touche sur l'écran. Lorsque le client touche l'écran, l'affichage de l'écran disparaît pour faire place à un menu prévu pour une exploration puissante assistée par des messages vocaux numérisés pour guider l'utilisateur dans son choix de sélections musicales.

Le module TSM est le module de mode de services de télécommunications. Ce module permet de gérer tous les services de gestion disponibles sur le réseau de distribution. Toutes les tâches propres aux télécommunications sont gérées comme des tâches d'arrière-plan du système. Ces tâches n'utilisent toujours que les parties de temps de traitement restant une fois que le système a achevé toutes ses tâches de premier plan. Ainsi, lorsque le système est occupé avec l'une de ses tâches de plus haute priorité, les tâches de télécommunications, automatiquement, vont s'efforcer de diminuer les contraintes sur les ressources du système et récupérer tout temps de traitement du microprocesseur laissé disponible. Quelques-unes des tâches gérées par ce module sont ci-après énumérées :
- transfert d'informations audio ou vidéo,
- comptabilité automatisée des redevances pour les sélections musicales,
- comptabilité de l'utilisation des sélections musicales,
- recueil des statistiques,
- diagnostics relatifs au système,
- sécurité du système (intégrité),
- contrôle de l'inventaire des sélections,
- vérification des configurations,
- perfectionnements du programme logiciel.

Le module SSC est le module de contrôle de sécurité du système. Ce module assure la gestion de la sécurité, chaque système se met en rapport avec un système contrôleur local selon un schéma temporel préétabli pour l'acquisition du signal d'approbation, sous la forme du numéro d'enregistrement, l'autorisant à fonctionner. En outre, s'il est constaté une fraude ou si le système ne peut plus communiquer au travers du réseau, ledit système s'arrête automatiquement de fonctionner.

Pour conclure, le système de reproduction audio-visuelle selon l'invention présente, comme cela vient d'être vu, un grand nombre d'avantages relativement aux systèmes de l'art antérieur. Ce système puissant utilisant un ordinateur est capable de stocker et reproduire n'importe quelle sélection musicale en conservant sa qualité d'origine. Il permet de remplacer de manière simple et efficace tous les dispositifs mécaniques et électroniques sophistiqués de l'art antérieur qui étaient générateurs de pannes, comme les bras de chargement des disques, les lasers, etc., en réduisant ainsi très significativement les coûts de maintenance. Il est simple et peu volumineux. Les gérants ou propriétaires de ce système peuvent efficacement contrôler les titres des sélections musicales puisqu'ils commandent uniquement les titres désirés, évitant ainsi de passer par une compagnie de distribution qui ordinairement n'acquiert que de faibles quantités de titres uniques puis imposent une rotation à leurs clients. Il est ici possible de n'acquérir que des titres spécifiques et ceci à prix réduit, plutôt que des albums CD entiers, ce qui permet de diminuer significativement les coûts de gestion. Avec le module intégré de vidéo interactive, ce système peut être également utilisé à des fins promotionnelles, d'étude de marché ou même utilisé comme machine karaoké. Enfin, l'utilisation d'un système d'exploitation multitâche autorise la gestion simultanée et sans conflit de l'ensemble des tâches exécutées, ce qui représente un avantage considérable.

## Revendications

1. Système de reproduction audiovisuelle déclenché par paiement de redevances, comprenant un dispositif à microprocesseur relié à un dispositif de paiement, ledit dispositif à microprocesseur comportant d'une part, des moyens de mémorisation, pour entre autres stocker sous forme numérique, les informations visuelles et sonores à exploiter, et d'autre part étant relié, par l'intermédiaire d'interfaces, à des moyens de visualisation et des moyens de reproduction sonores permettant de créer un univers multimédia, **caractérisé en ce que** ledit système est géré au moyen d'un système d'exploitation multitâche incluant une librairie d'outils et de services intégrée dans les moyens de mémorisation pour permettre l'exécution, par une pluralité de modules spécifiques d'une tâche, inclus dans ladite librairie et gérés par le système d'exploitation multitâche, d'opérations simultanées et ordonnées sur au moins les moyens de visualisation et les moyens de reproduction sonore en évitant tout conflit, le système de reproduction comprenant en outre un module de mode d'enregistrement permettant l'enregistrement ou le renouvellement d'enregistrement du système, le système ne fonctionnant que dans le mode d'enregistrement lorsque le système n'est pas enregistré.

2. Système de reproduction audiovisuelle selon la revendication 1, **caractérisé en ce que** l'enregistrement du système étant renouvelé avec le numéro de série de logiciel du module d'enregistrement, le système fournissant à un serveur au travers du réseau de distribution l'information additionnelle d'utilisateur, le système s'invalide après l'expiration d'une période de grâce configurable et envoit un message « hors d'état de fonctionner » lorsque le système n'a pas été capable d'établir une liaison et de renouveler son enregistrement.

3. Système de reproduction audiovisuelle selon les revendications 1 et 2, **caractérisé en ce que** les moyens de visualisation comportent un écran tactile pour permettre le contrôle du système ou la maintenance en fonction des outils ou services de la librairie exécutée.

4. Système de reproduction audiovisuelle selon l'une des revendications 1 à 3, **caractérisé en ce que** les moyens de visualisation permettent l'affichage d'images animées telles que des clips vidéo ou des images graphiques fixes pendant la reproduction sonore.

5. Système de reproduction audiovisuelle selon une des revendications 1 à 4, **caractérisé en ce qu'**un outil de gestion est déclenché par un commutateur de clé actionné par le gérant pour permettre à ce dernier, soit de configurer le système, soit d'acquérir de nouvelles sélections.

6. Système de reproduction audiovisuelle selon une des revendications précédentes, **caractérisé en ce qu'**il est de plus, relié, par l'intermédiaire d'une interface, à un modem de télécommunications, ledit système étant connecté à un réseau de distribution d'informations audiovisuelles au moyen du modem de télécommunications, cette liaison de télécommunications étant également gérée par un module TSM de service de télécommunications du système d'exploitation inclus dans la librairie d'outils et de services intégrée dans les moyens de mémorisation,

7. Système de reproduction audiovisuelle selon la revendication 6, **caractérisé en ce que** le module TSM permet notamment d'exécuter une pluralité de tâches comprenant une tâche de perfectionnement à distance du système d'exploitation du système de reproduction.

8. Système de reproduction audiovisuelle selon une des revendications précédentes, **caractérisé en ce qu'**il comporte une temporisation pour un déclenchement automatique et périodique d'une fonction d'un module de routine d'inactivité après une durée prédéterminée d'inutilisation du système, cette temporisation étant inscrite dans les moyens de mémorisation et gérée par le système d'exploitation.

9. Système de reproduction audiovisuelle selon l'une des revendications précédentes, **caractérisé en ce que** les moyens de visualisation comportent principalement un moniteur vidéo pour la reproduction des images des informations audiovisuelles coopérant avec un écran tactile de contrôle et de commande pour sélectionner au moins un tableau de contrôle parmi les suivants, un premier tableau à déroulement de sélection de titres pour aider à la recherche et à la sélection d'un titre désiré, un second tableau de contrôle de gestion pour le réglage du volume, des basses, des aiguës ou la commande de panoramiques sur le moniteur vidéo, un troisième tableau de balayage de la base de données de titres, d'utilisation privée, pour permettre l'exploration de la base de données contenant les titres disponibles au travers du réseau de distribution d'informations audiovisuelles, et un quatrième tableau de statistiques, d'utilisation privée, pour les estimations et les calculs statistiques relatifs aux titres.

10. Système de reproduction audiovisuelle selon l'une des revendications précédentes, **caractérisé en ce qu'**il comporte un module de commande système pour réaliser des fonctions envoyées par un dispositif de télécommande infrarouge au système et constituées par une entrée demandée par ce dispositif de télécommande.

11. Système de reproduction audiovisuelle selon la revendication 10, **caractérisé en ce que** les fonctions possibles sont au moins l'une des fonctions ci-dessous:
- réglage du volume sonore des sélections jouées,
- réglage du volume sonore de la source auxiliaire jouée,
- commande marche-arrêt du microphone,
- réglage du volume sonore du microphone,
- réglage balance, voie droite, voie gauche,
- contrôle du niveau des fréquences basses,
- contrôle du niveau des fréquences aiguës,
- commandes d'annulation ou de saut de plage d'une sélection musicale,
- commande d'effets panoramiques, zoom avant, zoom arrière,
- déclenchement d'une remise à zéro du programme logiciel.

12. Système de reproduction audiovisuelle selon la revendication 10 ou 11, **caractérisé en ce que** le module de commande système traite les commandes reçues par la télécommande dans une session d'arrière-plan pour laisser disponible une session de premier plan pour la réalisation d'autres opérations.

13. Système de reproduction audiovisuelle selon l'une des revendications précédentes, **caractérisé en ce qu'**il comporte un module de routine d'inactivité permettant de réaliser au moins une des fonctions ci-après :
- émission de partie de morceaux musicaux présents dans le système échantillonné pendant une durée spécifiée par le gérant;
- reproduction de sélection complète à des fins promotionnelles internes après une période d'inactivité déterminée;
- repli vers une source auxiliaire après un délai déterminé d'inactivité.

14. Système de reproduction audiovisuelle selon la revendication 6, **caractérisé en ce que** le système de reproduction établit une connexion automatique et périodique avec le réseau de distribution d'informations audiovisuelles via le modem de télécommunications, cette connexion étant, gérée par le système d'exploitation multitâches.

15. Système de reproduction audiovisuelle selon la revendication 6, **caractérisé en ce que** le système d'exploitation comprend un module d'enregistrement permettant d'envoyer, sur le réseau de distribution d'informations audiovisuelles via le modem, des paramètres d'enregistrement du système de reproduction audiovisuel.

16. Système de reproduction audiovisuelle selon la revendication 15, **caractérisé en ce que** le système d'exploitation comprend un module de sécurité mettant le système de reproduction hors services si les paramètres d'enregistrement sont déterminés comme invalides par le réseau de distribution d'informations audiovisuelles.

17. Système de reproduction audiovisuelle selon la revendication 15, **caractérisé en ce que** le module d'enregistrement met le système de reproduction hors de service lorsqu'aucune connexion n'a pu être établie avec le réseau de distribution pendant une période déterminée.

18. Système de reproduction audiovisuelle selon la revendication 6, **caractérisé en ce que** le système d'exploitation du système de reproduction audiovisuelle enregistre, sur les moyens de mémorisation, les sommes encaissées à la suite du paiement effectué par l'utilisateur puis établit une connexion avec le réseau de distribution qui calcule, à partir des sommes enregistrées, les redevances de droits d'auteur que le gérant ou propriétaire du système doit payer.

19. Système de reproduction audiovisuelle selon l'une des revendications précédentes, **caractérisé en ce que** les informations audiovisuelles sont stockées sous forme compressée et le système d'exploitation comprend des moyens de décompression, pour décompresser les informations audiovisuelles au moment où ces dernières sont reproduites sur les moyens de visualisation et les moyens de reproduction sonores.

20. Système de reproduction audiovisuelle selon l'une des revendications précédentes, **caractérisé en ce que** le format numérisé des informations audiovisuelles est de qualité hi-fi ou CD.

21. Système de reproduction audiovisuelle selon l'une des revendications précédentes, **caractérisé en ce que caractérisé en ce que** les moyens de mémorisation comprennent un catalogue des titres relatifs aux informations audiovisuelles disponibles, avec les redevances correspondantes, la sélection d'un titre entraînant automatiquement un traitement interne réalisant le cumul des redevances relatives au titre sélectionné.

22. Système de reproduction audiovisuelle selon l'une des revendications précédentes, **caractérisé en ce que** le dispositif de paiement comprend un monnayeur à pièces, et/ou un lecteur de billets, et/ou in lecteur de cartes à puce ou à piste magnétique.

## Patentansprüche

1. Audiovisuelles Wiedergabesystem, aktiviert durch die Zahlung von Gebühren, das ein mit einem Zahlungsgerät verbundenes Gerät mit Mikroprozessor umfasst, wobei das Gerät mit Mikroprozessor einerseits Speichermittel umfasst, um unter anderem die zu nutzenden visuellen und akustischen Informationen in digitaler Form zu speichern, und andererseits über Schnittstellen mit Anzeigemitteln und Tonwiedergabemitteln verbunden ist, die die Schaffung einer Multimedia-Welt zulassen, **dadurch gekennzeichnet, dass** das genannte System mittels eines Multitasking-Betriebssystems verwaltet wird, das eine Utility- und Service-Bibliothek enthält, die in die Speichermittel integriert ist, um die Ausführung, durch mehrere in der genannten Bibliothek enthaltene und von dem Multitasking-Betriebssystem verwaltete spezielle Aufgabenmodule, von gleichzeitigen und geordneten Operationen an wenigstens den Anzeigemitteln und den Tonwiedergabemitteln unter Vermeidung von Konflikten zuzulassen, wobei das Wiedergabesystem darüber hinaus ein Registriermodusmodul umfasst, das die Registrierung oder Neuregistrierung des Systems zulässt, wobei das System nur dann im Registriermodus arbeitet, wenn das System nicht registriert ist.

2. Audiovisuelles Wiedergabesystem nach Anspruch 1, **dadurch gekennzeichnet, dass** die Registrierung des Systems mit der Software-Seriennummer des Registriermoduls erneuert wird, wobei das System die zusätzliche Benutzerinformation einem Server über das Verteilungsnetz liefert, wobei das System nach Ablauf einer konfigurierbaren Wartezeit ungültig wird und eine Nachricht "außer Funktion" sendet, wenn das System keine Verbindung herstellen und sich neu registrieren konnte.

3. Audiovisuelles Wiedergabesystem nach Anspruch 1 und 2, **dadurch gekennzeichnet, dass** die Anzeigemittel einen Berührungsbildschirm umfassen, um die Steuerung des Systems oder die Wartung in Abhängigkeit von Utilities oder Services der benutzten Bibliothek zuzulassen.

4. Audiovisuelles Wiedergabesystem nach einem der Ansprüche 1 bis 3, **dadurch gekennzeichnet, dass** die Anzeigemittel die Anzeige von animierten Bildern wie z.B. von Videoclips oder von festen Graphikbildern bei der Tonwiedergabe zulassen.

5. Audiovisuelles Wiedergabesystem nach einem der Ansprüche 1 bis 4, **dadurch gekennzeichnet, dass** eine Verwaltungs-Utility von einem vom Administrator betätigten Schlüsselschalter aktiviert wird, so dass dieser entweder das System konfigurieren oder neue Selektionen erfassen kann.

6. Audiovisuelles Wiedergabesystem nach einem der vorherigen Ansprüche, **dadurch gekennzeichnet, dass** es ferner über eine Schnittstelle mit einem Telekommunikationsmodem verbunden ist, wobei das genannte System mit einem Netz zum Verteilen von audiovisuellen Informationen über das Telekommunikationsmodem verbunden ist, wobei diese Telekommunikationsverbindung auch durch ein TSM-Telekommunikationsdienstemodul des Betriebssystems verwaltet wird, das in der in die Speichermittel integrierten Utility- und Service-Bibliothek enthalten ist.

7. Audiovisuelles Wiedergabesystem nach Anspruch 6, **dadurch gekennzeichnet, dass** es das TSM-Modul insbesondere zulässt, mehrere Aufgaben auszuführen, die eine Fern-Weiterverarbeitungsaufgabe des Betriebssystems des Wiedergabesystems umfassen.

8. Audiovisuelles Wiedergabesystem nach einem der vorherigen Ansprüche, **dadurch gekennzeichnet, dass** es eine Verzögerungszeit für eine automatische und periodische Aktivierung einer Funktion eines Inaktivitätsroutinemoduls nach einer vorbestimmten Nichtbenutzungsdauer des Systems umfasst, wobei diese Verzögerung in die Speichermittel geschrieben ist und vom Betriebssystem verwaltet wird.

9. Audiovisuelles Wiedergabesystem nach einem der vorherigen Ansprüche, **dadurch gekennzeichnet, dass** die Anzeigemittel im Wesentlichen einen Videomonitor für die Wiedergabe von Bildern von audiovisuellen Informationen umfassen, die mit einem Steuer- und Einstellungs-Berührungsbildschirm zusammenwirken, um wenigstens eine aus den folgenden Steuerlisten auszuwählen: eine erste scrollbare Titelauswahlliste, die beim Suchen und Auswählen eines gewünschten Titels hilft, eine zweite Verwaltungssteuerliste zum Regeln von Lautstärke, Tieftönen, Hochtönen oder zur Panoramaeinstellung auf dem Videomonitor, eine dritte Liste zum Absuchen der Titeldatenbank, für private Nutzung, um das Durchsuchen der die verfügbaren Titel enthaltenden Datenbank über das audiovisuelle Informationsverteilungsnetz zuzulassen, und eine vierte Liste mit Statistiken, für private Nutzung, für statistische Schätzungen und Berechnungen in Bezug auf die Titel.

10. Audiovisuelles Wiedergabesystem nach einem der vorherigen Ansprüche, **dadurch gekennzeichnet, dass** es ein Systemsteuermodul zum Ausführen von Funktionen umfasst, die von einer Infrarot-Fernsteuerung zum System gesendet und durch eine von diester Fernsteuerung bewirkte Eingabe gebildet werden.

11. Audiovisuelles Wiedergabesystem nach Anspruch 10, **dadurch gekennzeichnet, dass** die möglichen Funktionen wenigstens eine der nachfolgenden Funktionen sind:
- Regelung der Lautstärke von abgespielten gewählten Optionen,
- Regelung der Lautstärke der abgespielten Zusatzquelle,
- Ein/Aus-Steuerung des Mikrofons,
- Regelung der Lautstärke des Mikrofons,
- Regelung von Balance, rechtem Kanal, linkem Kanal,
- Regelung des Pegels von Tieftonfrequenzen,
- Regelung des Pegels von Hochtonfrequenzen,
- Einstellungen zum Löschen oder Überspringen eines Bereichs einer musikalischen Auswahl,
- Einstellung von Panoramaeffekten, Einzoomen, Auszoomen,
- Auslösen einer Nullstellung des Softwareprogramms.

12. Audiovisuelles Wiedergabesystem nach Anspruch 10 oder 11, **dadurch gekennzeichnet, dass** das Systemsteuermodul die von der Fernsteuerung empfangenden Befehl in einer Hintergrundsitzung bearbeitet, damit eine Vordergrundsitzung für die Ausführung anderer Operationen zur Verfügung steht.

13. Audiovisuelles Wiedergabesystem nach einem der vorherigen Ansprüche, **dadurch gekennzeichnet, dass** es ein Inaktivitätsroutinemodul umfasst, mit dem wenigstens die folgenden Funktionen ausgeführt werden können:
- Senden eines Teils von in dem abgetasteten System vorhandenen Musikstücken während einer vom Administrator vorgegebenen Zeitdauer;
- Wiedergeben der kompletten Auswahl für interne Werbezwecke nach einer bestimmten Inaktivitätsperiode;
- Zurückgehen zu einer Zusatzquelle nach einer vorbestimmten Inaktivitätsperiode.

14. Audiovisuelles Wiedergabesystem nach Anspruch 6, **dadurch gekennzeichnet, dass** das Wiedergabesystem eine automatische und periodische Verbindung mit dem audiovisuellen Informationsverteilungsnetz über das Telekommunikationsmodem herstellt, wobei diese Verbindung von dem Multitasking-Betriebssystem verwaltet wird.

15. Audiovisuelles Wiedergabesystem nach Anspruch 6, **dadurch gekennzeichnet, dass** das Betriebssystem ein Registriermodul umfasst, mit dem auf dem audiovisuellen Informationsverteilungsnetz Registrierparameter des audiovisuellen Wiedergabesystems über das Modem gesendet werden können.

16. Audiovisuelles Wiedergabesystem nach Anspruch 15, **dadurch gekennzeichnet, dass** das Betriebssystem ein Sicherheitsmodul umfasst, das das Wiedergabesystem aus dem Betrieb nimmt, wenn die Registrierungsparameter von dem audiovisuelle Informationsverteilungssystem als ungültig ermittelt werden.

17. Audiovisuelles Wiedergabesystem nach Anspruch 15, **dadurch gekennzeichnet, dass** das Registriermodul das Wiedergabesystem aus dem Betrieb nimmt, wenn während einer bestimmten Periode keine Verbindung mit dem Verteilungsnetz hergestellt werden konnte.

18. Audiovisuelles Wiedergabesystem nach Anspruch 6, **dadurch gekennzeichnet, dass** das Betriebssystem des audiovisuellen Wiedergabesystems in den Speichermitteln die kassierten Summen aufgrund der vom Benutzer durchgeführten Zahlung registriert und dann eine Verbindung mit dem Verteilungsnetz herstellt, das von den registrierten Summen die Urheberrechtsgebühren berechnet, die der Administrator oder Eigentümer des Systems zu zahlen hat.

19. Audiovisuelles Wiedergabesystem nach einem der vorherigen Ansprüche, **dadurch gekennzeichnet, dass** die audiovisuelle Informationen in komprimierter Form gespeichert werden und das Betriebssystem Dekompressionsmittel umfasst, um die audiovisuellen Informationen in dem Moment zu dekomprimieren, in dem Letztere auf den Anzeigemitteln und den Tonwiedergabemitteln wiedergegeben werden.

20. Audiovisuelles Wiedergabesystem nach einem der vorherigen Ansprüche, **dadurch gekennzeichnet, dass** das digitale Format der audiovisuellen Informationen von HiFi- oder CD-Qualität ist.

21. Audiovisuelles Wiedergabesystem nach einem der vorherigen Ansprüche, **dadurch gekennzeichnet, dass** die Speichermittel einen Katalog von Titeln in Bezug auf die verfügbaren audiovisuellen Informationen mit den entsprechenden Gebühren umfassen, wobei die Auswahl eines Titels automatisch eine interne Verarbeitung mit sich bringt, die die Summierung von Gebühren in Bezug auf den gewählten Titel realisiert.

22. Audiovisuelles Wiedergabesystem nach einem der vorherigen Anspruche, **dadurch gekennzeichnet, dass** die Zahlungsvorrichtung einen Münzautomat und/oder einen Geldscheinleser und/oder einen Chipkartenleser oder Magnetstreifenleser umfasst.

## Claims

1. Audiovisual playback system triggered by payment of royalties, comprising a microprocessor device connected to a payment device, the said microprocessor device on the one hand including storage means in order *inter alia* to store in digital form the visual and audio information to be used, and on the other hand being connected by means of interfaces to visual display means and audio playback means which make it possible to create a multimedia universe, **characterised in that** the said system is managed by means of a multitask operating system including a library of tools and services integrated in the storage means in order to enable the execution, by a plurality of task-specific modules included in the said library and managed by the multitask operating system, of simultaneous and ordered operations on at least the visual display means and the audio playback means, avoiding any conflict, the playback system also comprising a recording mode module enabling the recording or the renewal of recording of the system, wherein the system only functions in the recording mode when the system is not recorded.

2. Audiovisual playback system as claimed in Claim 1, **characterised in that** as the recording of the system is renewed with the software serial number of the recording module and as the system supplying additional user information to a server via the distribution network, the system is disabled after the expiration of a configurable grace period and sends a message "out of service" when the system has not been able to establish a connection and to renew its recording.

3. Audiovisual playback system as claimed in Claims 1 and 2, **characterised in that** the visual display means comprise a touch-screen in order to enable the control of the system or the maintenance in operation of the tools or services of the executed library.

4. Audiovisual playback system as claimed in any one of Claims 1 to 3, **characterised in that** the visual display means enable the display of animated images such as video clips or fixed graphic images during the audio playback.

5. Audiovisual playback system as claimed in any one of Claims 1 to 4, **characterised in that** a management tool is triggered by a key switch actuated by the manager in order to enable this latter either to configure the system or to acquire new selections.

6. Audiovisual playback system as claimed in any one of the preceding claims, **characterised in that** it is also linked via an interface to a telecommunications modem, the said system being connected to a network for distributing audiovisual information by means of the telecommunications modem, this telecommunications connection being likewise managed by a telecommunications service TSM module of the operating system included in the library of tools and services integrated in the storage means.

7. Audiovisual playback system as claimed in Claim 6, **characterised in that** the TSM module makes it possible in particular to execute a plurality of tasks comprising a task of remote improvement of the operating system of the playback system.

8. Audiovisual playback system as claimed in any one of the preceding claims, **characterised in that** it includes a timing control for automatic and periodic initiation of a function of an inactivity routine module after a predetermined period of non-use of the system, this timing control being written into the storage means and managed by the operating system.

9. Audiovisual playback system as claimed in any one of the preceding claims, **characterised in that** the visual display means principally comprise a video monitor for the playback of images of the audiovisual information co-operating with a control and command touch-screen in order to select at least one control table from among the following, a first table for scrolling for selection of titles in order to aid the search for and selection of a desired title, a second management control table for adjustment of the volume, bass tones, treble tones, or for control of panning on the video monitor, a third table for scanning of the database of titles, for private use, in order to enable exploration of the database containing the titles available through the audiovisual information distribution network, and a fourth table of statistics, for private use, for statistical estimation and calculation in relation to the titles.

10. Audiovisual playback system as claimed in any one of the preceding claims, **characterised in that** it includes a system control module in order to carry out functions sent by an infrared remote control device to the system and constituted by an input requested by this remote control device.

11. Audiovisual playback system as claimed in Claim 10, **characterised in that** the possible functions are at least one of the following functions:
- adjustment of the volume of the selections played,
- adjustment of the volume of the auxiliary source played,
- on/off control of the microphone,
- adjustment of the volume of the microphone,
- adjustment of the balance, right channel, left channel
- checking of the bass frequency level,
- checking of the treble frequency level,
- control of cancellation or skipping of a musical selection,
- control of the effects of panning, zooming in, zooming out,
- triggering the resetting to zero of the program software.

12. Audiovisual playback system as claimed in Claim 10 or 11, **characterised in that** the system control module processes the commands received by the remote control in a background session in order to leave a foreground session available in order to carry out other operations.

13. Audiovisual playback system as claimed in any one of the preceding claims, **characterised in that** it includes an inactivity routine module which makes it possible to carry out at least one of the following functions:
- transmission of part of musical pieces present in the sampled system during a specified period by the manager;
- playback of complete selection for internal promotional purposes after a specified period of inactivity;
- return to an auxiliary source after a specified period of inactivity.

14. Audiovisual playback system as claimed in Claim 6, **characterised in that** the playback system establishes an automatic and periodic connection with the network for distribution of audiovisual information via the telecommunications modem, this connection being managed by the multitask operating system.

15. Audiovisual playback system as claimed in Claim 6, **characterised in that** the operating system comprises a recording module which makes it possible to send recording parameters of the audiovisual playback system over the audiovisual information distribution network via the telecommunications modem.

16. Audiovisual playback system as claimed in Claim 15, **characterised in that** the operating system comprises a security module which disables the playback system if the recording parameters are determined as invalid by the audiovisual information distribution network.

17. Audiovisual playback system as claimed in Claim 15, **characterised in that** the recording module disables the playback system when it has not been possible to establish any connection to the distribution network during a specified period.

18. Audiovisual playback system as claimed in Claim 6, **characterised in that** the operating system of the audiovisual playback system records, on storage means, the sums collected following payment effected by the user then establishes a connection to the distribution network which calculates, from the sums recorded, the royalties which the manager or proprietor of the system is to pay.

19. Audiovisual playback system as claimed in any one of the preceding claims, **characterised in that** the audiovisual information is storeel in compressed form and the operating system comprises decompression means in order to decompress the audiovisual information at the moment when these latter are reproduced on the visual display means and the audio playback means.

20. Audiovisual playback system as claimed in any one of the preceding claims, **characterised in that** the digitised audiovisual information is of hifi or CD quality.

21. Audiovisual playback system as claimed in any one of the preceding claims, **characterised in that** the storage means comprise a catalogue of titles relating to the available audiovisual information, with the corresponding royalties, wherein the selection of a title automatically involves internal processing carrying out the accumulation of royalties relating to the selected title.

22. Audiovisual playback system as claimed in any one of the preceding claims, **characterised in that** the payment device comprises a coin change machine and/or a banknote reader and/or a chip or magnetic strip card reader.
